# EUROPEAN PATENT APPLICATION

(11) **EP 3 338 538 A1**
(43) Date of publication of application: **27.06.2018**
(21) Application number: 16206641.9
(22) Date of filing: 23.12.2016
(51) Int. Cl.: A01G 9/08, A01G 9/10

(54) **PLANTING ADAPTER, PLANTING SYSTEM AND METHOD FOR TRANSPLANTING A PLANT**

(71) Applicant: Growdeal Oy, 20900 Turku (FI)
(72) Inventor: SIITONEN, Petri, 20660 Littoinen (FI); HELANDER, Hannu, 20900 Turku (FI)
(74) Representative: Berggren Oy, Turku

(57) **Abstract**

The present invention relates to a planting adapter (101, 201, 301) comprising a planting member (102, 202) having a cavity (103, 203, 309) with an opening through which a root ball of a plant is to be inserted into the cavity (103, 203, 309), and a base plate (104, 204, 304) attached to the planting member (102, 202) for supporting said planting member (102, 202). The present invention further relates to a planting system (401) and a method for transplanting a plant.

## Description

### TECHNICAL FIELD OF THE INVENTION

The present invention relates to a planting adapter and a method for transplanting a plant according to the preambles of the appended independent claims. The invention also relates to a planting system comprising said planting adapter.

### BACKGROUND OF THE INVENTION

Plants have been cultivated and grown for a long time for various purposes, such as, for food, decoration and shelter. Several growing methods are known, for example, growing from seeds or growing from a pre-grown seedling or plant.

It is typical to buy a seedling or a plant and transplant it at home. In this procedure, the whole seedling or plant with a root ball is moved from one place to another like a garden, a receptacle or a cultivation base. Sometimes, there is a need to move an already planted plant to a new place, for example, for enriching the growing conditions and growing capacity of the plant.

Transplanting of a plant is usually laborious and time consuming. There is a possibility to fail with an alignment of the plant and cause damages to it. Transplanting also requires special equipment and accessories.

### OBJECTIVES OF THE INVENTION

It is the main objective of the present invention to reduce or even eliminate the problems in the prior art.

It is an objective of the present invention to provide a planting adapter, which enables simple and easy transplanting of various kinds of plants.

Another objective of the present invention is to provide an ecological planting system, which is quick and simple to use. It is also an objective of the present invention to provide a planting system enabling to facilitate planting.

It is also an objective of the present invention to provide a method enabling to transplant a plant with a root ball properly. It is a further objective of the invention to provide a method for transplanting a plant with minimal damages to the plant.

In order to realise the above-mentioned objectives, the planting adapter and the method for transplanting a plant according to the invention are characterised by what is presented in the characterising parts of the appended independent claims. Advantageous embodiments of the invention are described in the dependent claims.

### DESCRIPTION OF THE INVENTION

A typical planting adapter according to the invention comprises a planting member having a cavity with an opening through which a root ball of a plant is to be inserted into the cavity, and a base plate attached to the planting member for supporting said planting member.

In the planting adapter according to the invention, the planting member is a receiving part for the root ball of the plant. The planting member may have a shape of a truncated cone or a cylinder in which case the cross-section of the planting member is round. The planting member may also have a shape of a truncated pyramid or a rectangular prism in which case the cross-section of the planting member is rectangle. The planting member according to the invention has a first end defined by an upper edge of the side surfaces and a second end defined by a lower edge of the side surfaces. The first end and the second end are preferably opposite to each other. The planting member comprises a cavity, which is located in the planting member in such a manner that the opening of the cavity is at the first end of the planting member, i.e. the first end of the planting member is open for receiving the root ball of the plant.

The cavity may have the same shape as the planting member, in which case the cavity may be defined by the inner surfaces of the planting member and the base plate. The shape of the cavity may also differ from the shape of the planting member. For example, the cavity may have the shape of a truncated cone and the planting member may be a cylinder. Preferably, the shape of the planting member and the cavity is a truncated cone. The shape of the truncated cone ensures that the root ball of the plant fits well to the cavity. This enhances support for the plant.

The base plate is attached to the second end of the planting member. The shape of the base plate may be round or rectangle. Preferably, the base plate is a flat plate. The size of the base plate may be the same or bigger than the size of the second end of the planting member. Preferably, the size of the base plate is the same as the bottom of the planting receptacle. The size of the base plate can be changed, for example, by cutting, bending or tearing to a desired size before use. The base plate according to the invention comprises a first surface and a second surface. The planting member is attached to the base plate in such a manner that the second end of the planting member is against the first surface of the base plate. The planting member is preferably located in the center of the first surface and the axis of the planting member is preferably perpendicular to the first surface of the base plate. In this case, the opening of the cavity is essentially opposite to the base plate. The planting member may be attached to the base plate, for example, with glue or tape. The base plate supports the planting member in a straight position.

The planting adapter according to the invention can be used for facilitating transplanting of a plant to a planting receptacle. Various kinds of planting receptacles can be used, such as planting pots, balcony boxes or pails. Preferably, the planting adapter is used with a planting receptacle having a flat bottom. By using the planting adapter, the plant can be easily planted to a straight and correct position.

In this context the term "transplanting" is used to refer to the practice of replanting, in which a plant in one location is planted elsewhere. The plant may be transplanted, for example, from a temporary planting pot to another planting receptacle. In a case of transplanting a plant to the planting receptacle, the planting adapter is first set inside the empty receptacle in such a manner that the second surface of the base plate is essentially parallel with the bottom of the receptacle. Preferably, the second surface of the base plate is against the bottom of the receptacle. In this situation, the planting member is essentially perpendicular to the bottom of the receptacle and the opening of the cavity is opposite to the bottom of the receptacle. The space between the receptacle and the planting adapter is filled with soil. The root ball of the plant is inserted inside the cavity of the planting member. Additional soil may be arranged over the top of the root ball and the soil can be gently tamped down. The planting adapter enables the plant to be easily transplanted to a straight and correct position in the receptacle. This helps rooting of the plant.

According to an embodiment of the invention the planting member is made of a biodegradable material. In this context the term "biodegradable" refers to the materials which are capable of being broken down (decomposed) by the action of living microorganisms, usually bacteria. Suitable materials for the planting member are, for example, recycled biodegradable pulp, biodegradable plastics, board or a combination of those. An advantage of using the biodegradable material is that the planting member decomposes to soil after watering of the transplanted plant and enables better and faster rooting of the plant. The planting member may also have holes through the wall for better rooting of the plant. The biodegradability of the planting member enables also the planting member to be recycled with soil. The biodegradation time can vary depending on the used material and the wall thickness of the planting member. The biodegradation time of the planting member can be, for example, in the range of 1 to 4 weeks.

The planting member may also be made of any other suitable plastic material such as polymer, ceramics or combinations of those. Preferably, the planting member is made of polymer, such as polyethylene or polypropylene. Plasticity of the material enables the planting member to be shaped into a desired shape, for example, a truncated cone or a cylinder. If the planting member is made of a non-biodegradable plastic material, the planting member may have holes through the wall for an outlet of the excess water and enabling better rooting of the plant. The planting member made of polymer can be re-used for planting or recycled with plastics waste.

According to an embodiment of the invention the base plate is made of a biodegradable material. Suitable materials for the base plate are, for example, recycled biodegradable pulp, biodegradable plastics, board or a combination of those. If the base plate is made of the biodegradable material it can decompose to soil after watering of the transplanted plant and enables better and faster rooting of the plant. The base plate may also have holes for better rooting of the plant. Biodegradability of the base plate enables also the base plate to be recycled with soil. The biodegradation time can vary depending on the used material and the thickness of the base plate. The biodegradation time of the base plate can be, for example, in the range of 1 to 4 weeks.

The base plate may also be made of any other suitable material such as polymer, ceramics or combinations of those. Preferably, the base plate is made of polymer, such as polyethylene or polypropylene. If the base plate is made of a non-biodegradable plastic material, the base plate may have holes for outlet of the excess water. The base plate made of polymer can be re-used for planting or recycled with plastics waste.

According to an embodiment of the invention the cavity has a shape of a truncated cone or a cylinder. The truncated cone refers to a cone with the apex straight cut off by an intersecting plane. The intersecting plane is preferably parallel to the base. A truncated cone has a first end (base) and a second end (intersecting plane cutting of the apex), wherein the diameter of the first end is larger than the diameter of the second end. The cavity, shaped as the truncated cone, is preferably located in the planting member in such a manner, that first end of the cavity is at the first end of the planting member. The first end of the truncated cone acts as an opening of the cavity through which a root ball of a plant is to be inserted into the cavity. The second end of the truncated cone is defined by the first surface of the base plate. The diameter of the cavity is preferably equivalent to the diameter of the root ball of the plant which is to be inserted into the cavity. The diameter of the cavity can be, for example, in a range of 30 to 500 mm. The height of the cavity is at least the same as the height of the root ball of the plant. The purpose of the cavity is to support the root ball of the plant to a correct position. Due to the shape of the truncated cone of the cavity, the root ball of the plant fits well to the planting member.

The cavity may also have a shape of a cylinder. The cylinder has an opposite first end and a second end, wherein the diameter of the first end is the same as the diameter of the second end. The cylinder is located in the planting member in such a manner that the first end of the cylinder is at the first end of the planting member for receiving the root ball of the plant. The second end of the cylinder can be closed by the first surface of the base plate. The diameter of the cavity can be, for example, in a range of 30 to 500 mm. The cylinder shaped cavity supports the root ball and also a stem of the plant in a straight position.

According to an embodiment of the invention the planting member has a shape of a hollow cylinder. The hollow cylinder has opposite first and second ends, the first end being defined by an upper edge of the side surfaces and the second end being defined by a lower edge of the side surfaces. In this case, the inner surface of the planting member and the first surface of the base plate define the cavity. The first end acts as an opening of the cavity for receiving the root ball of the plant. The second end is attached to the first surface of the base plate for supporting the planting member in such a manner that the axis of the planting member is essentially perpendicular to the first surface of the base plate.

According to an embodiment of the invention the planting member comprises a first section and a second section, the cavity being located in the first section and the base plate being attached to the second section. Both sections of the planting member have a first end and a second end. The cavity is located in the first section in such a manner, that the opening of the cavity is at the first end of the first section. The second end of the first section is attached to the first end of the second section. The second end of the second section is attached to the base plate. The sections may be a uniform piece or attached to each other, for example, with glue or tape.

The first section and the second section may have a same shape or the first section and the second section may have a different shape. Preferably, the first section has a shape of a truncated cone and the second section has a shape of a cylinder. In this case, the first section acts as a receiving part for the root ball and the second section acts as a base for supporting the first section to the base plate. The height of the planting member may be adjusted with the second sections of different heights or with adjustable second section. This enables the planting member to be adjusted to the correct height inside a planting receptacle.

The planting member may also comprise intermediate sections which are attached to at least two of the following: the first section, the second section or another intermediate section. Preferably, the planting member comprises one intermediate section, which is located between the first section and the second section. The intermediate section may have a shape of a truncated cone or a cylinder.

According to an embodiment of the invention the diameter of the first section of the planting member is larger than the diameter of the second section of the planting member. The smaller diameter of the second section enables the receptacle to have more capacity for soil and the soil to be extended under the first section of the planting member. This ensures good availability of the nutrients for the plant and enhances rooting.

According to an embodiment of the invention the planting member and the base plate are a uniform piece. Due to the uniform structure, the planting adapter has no joints, which makes the structure stronger.

According to an embodiment of the invention the planting adapter comprises a detachable cover for covering the opening of the cavity. The cover prevents the access of the soil to the cavity during the filling of the receptacle or during the storage. The cover may be made of a biodegradable material or any suitable plastic material, such as polymer, ceramics or combination of these. Preferably, the cover is made of the same material as the planting member.

According to an embodiment of the invention the shape of the base plate is round or rectangle. Preferably, the shape of the base plate is the same as the shape of the bottom of the planting receptacle. Preferably, the base plate has the same size as the bottom of the receptacle. The same shape and size ensures a good fit of the planting adapter to the planting receptacle and immovability during the filling of the planting receptacle with soil. According to another embodiment of the invention the base plate is flat.

A typical planting system according to the invention comprises a planting receptacle, and a planting adapter according to the invention, the planting adapter being arranged inside the planting receptacle in such a manner that the base plate is essentially parallel with a bottom of the planting receptacle. Preferably, the planting adapter is arranged inside the planting receptacle in such a manner that the base plate is against the bottom of the planting receptacle. When arranged inside the planting receptacle, the axis of the planting member is essentially perpendicular to the bottom of the planting receptacle and the opening of the cavity is opposite to the bottom of the planting receptacle. The opening of the cavity and the upper edge of the receptacle may be essentially at the same height.

The planting receptacle may be, for example, a planting pot, a box or a pail. The planting receptacle may have any shape. Preferably, the bottom of the planting receptacle is round or rectangle and the bottom is flat. The inner diameter or the side length of the planting receptacle can be, for example, in the range of 60 to 1000 mm. The height of the planting receptacle can be, for example, in the range of 50 to 1000 mm.

According to an embodiment of the invention the planting system comprises soil arranged to a space between the planting receptacle and the planting adapter. The used soil may be any substance or media in which vegetation may take root and grow, and includes not only earth but also compost, manure, muck, humus, sand and the like, adapted to support plant growth. The soil, regardless of its composition, may be filled into the planting receptacle either dry or in the presence of moisture.

The planting receptacle may have an empty space at the bottom of the receptacle for the excess water. In this case, the planting receptacle may comprise an intermediate floor or clips for the base plate. For a drainage purpose, a coarse material can be placed to the bottom of the planting receptacle. The used drainage material can be, for example, coarse sand, gravel, pebbles or pot shards. The drainage material allows water in the soil to drain freely, whereby adequate air is available for the roots. The planting adapter can be placed over the drainage material or the drainage material can be arranged over the base plate when the base plate is against the bottom of the planting receptacle.

According to an embodiment of the invention, the planting adapter comprises a plurality of planting members attached to the base plate. For example, the planting adapter for a rectangular box may have several planting members at a constant distance from each other attached to the same rectangular base plate. The advantage of having several planting members attached to the same base plate is that, several plants can be transplanted to the same planting receptacle in correct places faster and more easily.

According to an embodiment of the invention the base plate has essentially the same size as the bottom of the planting receptacle. In a case where the bottom of the planting receptacle is round, the base plate may have the same diameter as the bottom of the planting receptacle. In a case where the bottom of the planting receptacle is rectangular, the base plate may have a same side length as the bottom of the receptacle in at least one direction. For example, if the planting receptacle is a rectangular box, the base plate may have at least the same width or the same depth than the bottom of the box. The advantage of having the same size at least in one direction is that the base plate stays still in the planting receptacle during the filling of the receptacle with soil.

According to an embodiment of the invention the planting receptacle is made of a recyclable waterproof board. The used board may be any board material which can be recycled, for example, paperboard or cardboard. The board may be coated to be waterproof or treated with a waterproofing agent, in which case it will not disintegrate when exposed to moisture for long durations. At least an inner surface of the planting receptacle is coated or treated to remain relatively unaffected by water. An empty planting receptacle may be recycled with the board waste. The planting receptacle may be made of any other suitable material such as polymer, composite or ceramics. An outer surface of the planting receptacle may be patterned or colored for a decoration purposes.

According to an embodiment of the invention the planting system comprises a detachable cover for covering the planting receptacle. The cover prevents the access of the soil from the planting receptacle during the storage and enables the planting receptacles to be stored one on the other. The cover may be made of a recyclable waterproof board, for example, paperboard or cardboard. The cover may be made of any other suitable material such as polymer, composite or ceramics.

A typical method for transplanting a plant according to the invention comprises arranging a planting adapter according to the invention inside a planting receptacle so that the base plate is essentially parallel with the bottom of the planting receptacle, filling the space between the planting receptacle and the planting adapter with soil, and inserting a root ball of the plant inside the cavity of the planting member. If the plant is pre-potted, a temporary pot is to be removed before inserting the root ball of the plant into the cavity. The soil can be gently tamped down after inserting the root ball of the plant into the cavity. With the planting system according to the invention, a life time of a plant, for example, a herb or salad can be extended.

The exemplary embodiments of the invention presented in this text are not interpreted to pose limitations to the applicability of the appended claims. The verb "to comprise" is used in this text as an open limitation that does not exclude the existence of also unrecited features. The features recited in the dependent claims are mutually freely combinable unless otherwise explicitly stated.

The exemplary embodiments presented in this text and their advantages relate by applicable parts to the planting adapter as well as the planting system and the method for transplanting a plant according to the invention, even though this is not always separately mentioned.

### BRIEF DESCRIPTION OF THE DRAWINGS

- Fig. 1: illustrates a planting adapter according to a first embodiment of the invention,
- fig. 2: illustrates a planting adapter according to a second embodiment of the invention,
- fig. 3: illustrates a planting adapter according to a third embodiment of the invention, and
- fig. 4: illustrates a planting system according to an embodiment of the invention.

### DETAILED DESCRIPTION OF THE DRAWINGS

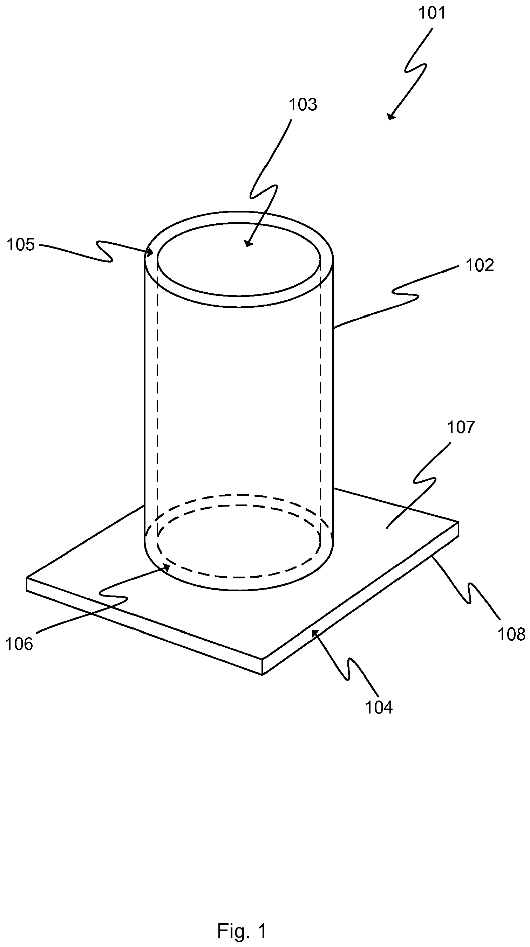

Fig. 1 illustrates a planting adapter according to a first embodiment of the invention. The planting adapter 101 comprises a planting member 102 having a cavity 103 with an opening and a base plate 104 attached to the planting member 102. The planting member 102 has a shape of a cylinder. The planting member 102 has opposite first and second ends 105 and 106. The cavity 103 having a shape of a cylinder is located in the planting member 102 in such a manner that the opening of the cavity 103 is at the first end 105 of the planting member 102. Thus, the first end 105 of the planting member 102 is open for receiving a root ball of a plant.

The base plate 104 is a flat plate having a shape of a rectangle. The base plate 104 comprises a first surface 107 and a second surface 108. The planting member 102 is attached to the base plate 104 in such a manner that the second end 106 of the planting member 102 is against the first surface 107 of the base plate 104. The planting member 102 is essentially perpendicular to the base plate 104. The planting member 102 is located in the center of the first surface 107 of the base plate 104. The opening of the cavity 103 is opposite to the base plate 104 and the base plate 104 closes the cavity 103.

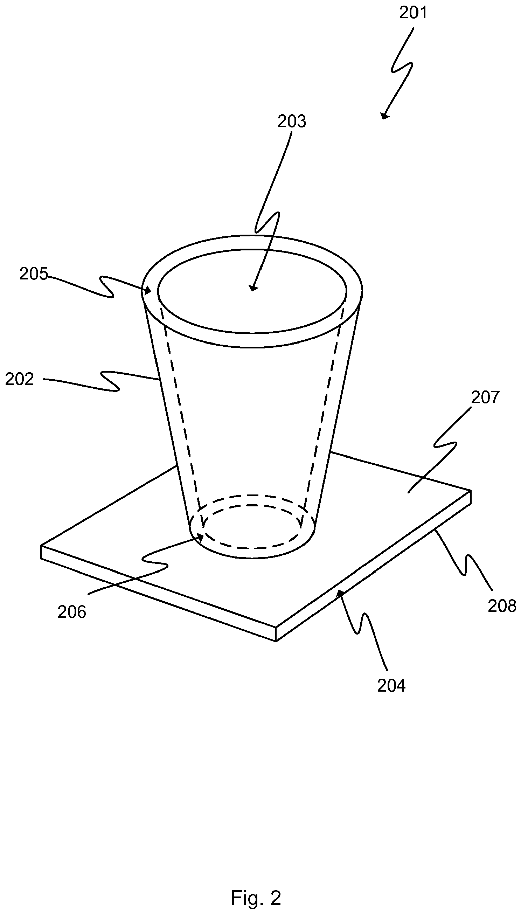

Fig. 2 illustrates a planting adapter according to a second embodiment of the invention. The planting adapter 201 comprises a planting member 202 having a cavity 203 with an opening and a base plate 204 to which the planting member 202 is attached. The planting member 202 has a shape of a truncated cone. The planting member 202 has opposite first and second ends 205 and 206. The diameter of the first end 205 is larger than the diameter of the second end 206.

The cavity 203 has a shape of a truncated cone. The cavity 203 has a first end and a second end, wherein the diameter of the first end is larger than the diameter of the second end. The cavity 203 is located in the planting member 202 in such a manner that the first end of the cavity 203 is at the first end 205 of the planting member 202. The first end of the cavity 203 is open for receiving a root ball of a plant. The second end of the cavity 203 is defined by the base plate 204.

The base plate 204 has a shape of a rectangle. The base plate 204 is a flat plate having a first surface 207 and a second surface 208. The planting member 202 is attached to the base plate 204 in such a manner that the second end 206 of the planting member 202 is against the first surface 207 of the base plate 204. The planting member 202 is located in the center of the first surface 207 of the base plate 204. The opening of the cavity 203 is opposite to the base plate 204. The base plate 204 supports the planting member 202 in a straight position.

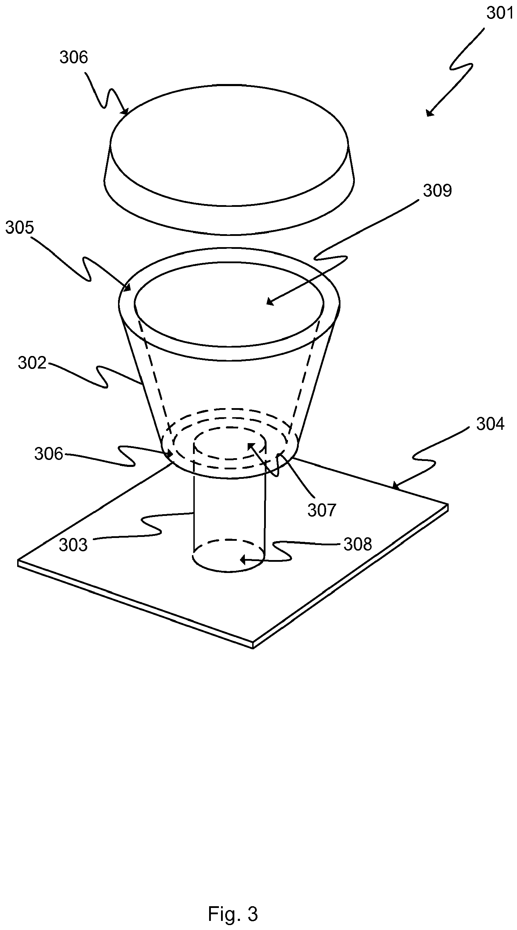

Fig. 3 illustrates a planting adapter according to a third embodiment of the invention. The planting adapter 301 comprises a planting member having a first section 302 and a second section 303, and a base plate 304. The first section 302 and the second section 303 are attached to each other. The first section 302 has a first end 305 and a second end 306, and the second section 303 has a first end 307 and a second end 308. The first section 302 of the planting member has a shape of a truncated cone. A cavity 309 also having a shape of a truncated cone is located in the first section 302 in such a manner that the opening of the cavity 309 is at the first end 305 of the first section 302. Thus, the first section 302 is a receiving part for a root ball of a plant.

The second section 303 has a shape of a cylinder. The diameter of the second section 303 is smaller than the diameter of the first section 302. The second end 306 of the first section 302 is attached to the first end 307 of the second section 303. The base plate 304 is attached to the second end 308 of the second section 303. The second section 303 is a base for supporting the first section 302 to the base plate 304.

The planting adapter 301 also comprises a detachable cover 306. The cover 306 is used for covering the first end 305 of the first section 302.

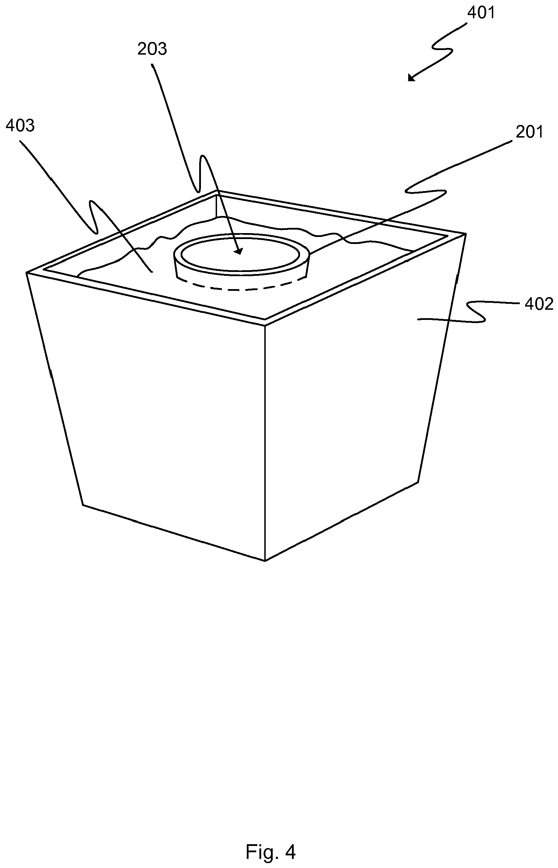

Fig. 4 illustrates a planting system according to an embodiment of the invention. The planting system 401 comprises a planting adapter 201 as described in fig. 2 and a planting receptacle 402. The planting adapter 201 is arranged inside the planting receptacle 402 in such a manner that the base plate is against the bottom of the planting receptacle 402. Thus, the axis of the planting adapter 201 is perpendicular to the bottom of the planting receptacle 402 and the opening of the cavity 203 is opposite to the bottom of the planting receptacle 402. The opening of the cavity 203 and the upper edge of the planting receptacle 402 are essentially at the same height. The planting system 401 further comprises soil 403 arranged to a space between the planting receptacle 402 and the planting adapter 201. A root ball of a plant is to be inserted into the cavity 203 of the planting adapter 201.

Only advantageous exemplary embodiments of the invention are described in the figures. It is clear to a person skilled in the art that the invention is not restricted only to the examples presented above, but the invention may vary within the limits of the claims presented hereafter. Some possible embodiments of the invention are described in the dependent claims, and they are not to be considered to restrict the scope of protection of the invention as such.

## Claims

1. A planting adapter, **characterised in that** the planting adapter comprises:
- a planting member having a cavity with an opening through which a root ball of a plant is to be inserted into the cavity, and
- a base plate attached to the planting member for supporting said planting member.

2. The planting adapter according to claim 1, **characterised in that** the planting member is made of a biodegradable material.

3. The planting adapter according to claim 1 or 2, **characterised in that** the cavity has a shape of a truncated cone or a cylinder.

4. The planting adapter according to any of the preceding claims, **characterised in that** the planting member has a shape of a hollow cylinder.

5. The planting adapter according to any of the preceding claims, **characterised in that** the planting member comprises a first section and a second section, the cavity being located in the first section and the base plate being attached to the second section.

6. The planting adapter according to claim 5, **characterised in that** the diameter of the first section is larger than the diameter of the second section.

7. The planting adapter according to any of the preceding claims, **characterised in that** the planting member and the base plate are uniform piece.

8. The planting adapter according to any of the preceding claims, **characterised in that** the planting adapter comprises a detachable cover for covering the opening of the cavity.

9. The planting adapter according to any of the preceding claims, **characterised in that** the shape of the base plate is round or rectangle.

10. A planting system, comprising:
- a planting receptacle,
**characterised in that** the planting system comprises a planting adapter according to any of the preceding claims, the planting adapter being arranged inside the planting receptacle in such a manner that the base plate is essentially parallel with a bottom of the planting receptacle.

11. The planting system according to claim 10, **characterised in that** the planting system comprises soil arranged to a space between the planting receptacle and the planting adapter.

12. The planting system according to claim 10 or 11, **characterised in that** the base plate has essentially the same size as the bottom of the planting receptacle.

13. The planting system according to any of the claims 10-12, **characterised in that** the planting receptacle is made of a recyclable waterproof board.

14. The planting system according to any of the claims 10-13, **characterised in that** the planting system comprises a detachable cover for covering the planting receptacle.

15. A method for transplanting a plant, **characterised in that** the method comprises:
- arranging a planting adapter according to any of the claims 1-9 inside a planting receptacle so that the base plate is essentially parallel with the bottom of the planting receptacle,
- filling the space between the planting receptacle and the planting adapter with soil, and
- inserting a root ball of the plant inside the cavity of the planting member.
